# EUROPÄISCHE PATENTSCHRIFT

(11) **EP 2 102 115 B1**
(45) Veröffentlichungstag und Bekanntmachung des Hinweises auf die Patenterteilung: **20.08.2014**
(21) Anmeldenummer: 07856236.0
(22) Anmeldetag: 23.11.2007
(51) Int. Cl.: C02F 3/30, C02F 1/00, B01D 24/12, C02F 101/10, C02F 101/16

(54) **VERTIKAL-HORIZONTAL-FILTERANLAGE ZUR BIOLOGISCHEN REINIGUNG VON SCHMUTZWÄSSERN**
VERTICAL-HORIZONTAL FILTER UNIT FOR THE BIOLOGICAL PURIFICATION OF POLLUTED WATER
INSTALLATION DE FILTRATION VERTICALE-HORIZONTALE POUR L'ÉPURATION BIOLOGIQUE D'EAUX USÉES

(30) Priorität: 25.11.2006 EP 06024475
(43) Veröffentlichungstag der Anmeldung: 23.09.2009
(73) Patentinhaber: Areal Vertriebs- und Service GmbH & Co. KG, 55116 Mainz (DE)
(72) Erfinder: Böttcher, Joachim, 67822 Hengstbacherhof (DE)
(74) Vertreter: Patentanwälte Dr. Keller, Schwertfeger
(86) Internationale Anmeldenummer: PCT/EP2007/010202
(87) Internationale Veröffentlichungsnummer: WO 2008/061785

(56) Entgegenhaltungen:
- CH-A5- 671 571
- DE-A1- 4 422 017
- DE-A1- 19 737 690
- DE-C1- 4 225 699
- DE-C1- 4 323 610

## Beschreibung

Zur Reinigung häuslicher und industrielle Abwässer werden in städtischen Ballungsräumen technisch aufwändige Kläranlagen eingesetzt. In ländlichen Gegenden hingegen besteht ein Bedarf an kostengünstigen und ökologisch verträglichen Abwasserreinigungsanlagen, z. B. Pflanzenkläranlagen, die sich in das Landschaftsbild einfügen und umweltverträglich betrieben werden können.

Zu solchen Pflanzenkläranlagen gehören z. B. die in der DE 42 25 699 beschriebene Pflanzenkläranlage. Die Pflanzenkläranlage besteht aus einem vierschichtigen, vertikal durchströmten Bodenkörper, der mit Schilf bepflanzt ist. In den ersten beiden Schichten findet der Kohlenstoffalabau, die Nitrifikation sowie die-Phosphorelimination durch Absorption im Bodenkörper statt. In der dritten Schicht wird die Nitritikation durchgeführt. Zusätzlich wird als organische Kohlenstoffquelle ein Strohkohlenabwasserextrakt in die dritte Schicht eingeführt. Die Schichten sind aus verschiedenen Materialien aufgebaut und weisen eine unterschiedliche Homogenität auf. Die Verweildauer wird erreicht, indem ein Aufstau des von oben nach unten strömenden Schmutzwassers erzeugt wird.

In der DE 43 23 610 wird ein Biopalter zur biologischen Reinigung von Böden und Schlämmen beschrieben, bei dem ein aerober Bereich und ein anaerober Bereich übereinander angeordnet sind. Im anaeroben Bereich werden Stickoxide durch denitrifizierende Mikroorganismen zur Stickstoff und Sauerstoff bzw. Wasser umgesetzt. Das Abwasser durchströmt zunächst den aeroben Bereich und anschließend den anaeroben Bereich. Die im Boden oder Schlamm vorhandenen organischen Schadstoffe z. B. Mineralöle, werden durch aerobe Mikroorganismen chemisch umgesetzt. Die in dem aeroben Bereich nicht umgesetzten Schadstoffe oder Umwandlungsprodukte gelangen in den anaeroben Bereich und können dort von weiteren Mikroorganismen umgesetzt werden. Zwischen aeroben Bereich und anaeroben Bereich kann ein wasserdurchlässiges Vlies angeordnet werden. Der obere Bereich wird durch eine Boden- oder Schlammschicht gebildet, der anaerobe Bereich durch eine Drainageschüttung.

In der DE 197 37 690 wird eine Vertikal-Horizontalage-Filteranlage zur Reinigung von Abwässern beschrieben. Die Anlage besteht aus einer unteren Filterzone und einer oberen Filterzone. Die obere Filterzone kann Tonmineralien und/oder Eisenspäne enthalten, die untere Filterzone besteht aus Feinkies und/oder Mittelkies und es können kohlenstoffhaltige Zusatzstoffe beigemischt werden. Zwischen oberer Filterzone und unterer Fiiterzone befindet sich eine Sperrschicht mit Durchbrechungen. Eine Einteilung in einen aeroben oder anaeroben Bereich ist nicht beschrieben.

In der DE 42 25 699 C1 wird eine Pflanzenkläranlage beschrieben, die aus einem vierschichtigen, vertikal durchströmten Bodenkörper besteht, wobei die erste Schicht eine aerobe Sandschicht ist, die mit schiff bepflanzt ist. Die zweite Schicht besteht aus Grobsand bzw. lockerern Gestein, die bei sehr hohen Stickstoffkonzentrationen belüftet werden kann. Die dritte Schicht ist eine anoxische, schluffreiche, tonarme Sandschicht und die letzte Schicht besteht aus Grobsand bzw, Lockerstein. In den ersten beiden Schichten finden ein Kohlenstoffabbau, Nitrifikation sowie Phosphorelimination statt. In der dritten Schicht wird eine Denitrifikation durchgefünrt. Um einen Rustkohlenstoff- bzw. Restammoniakabbau zu gewährleisten, ist eine zusätzliche Sauerstoffversorgung In der untersten Schicht vorgesehen.

Die im Stand der Technik beschriebenen Anlagen weisen aus unterschiedlichen Gründen Probleme hinsichtlich der Erreichbarkeit einer optimalen Stoffwechselleistung, insbesondere Denitrifikationsleistung in dem aeroben Bereich auf. Es ist daher wünschenswert, eine Anlage bereit zu stellen, bei der über geeignete Vorrichtungen und Maßnahmen eine Erhöhung des Stoffwechsels, insbesondere der Denitrifikation erreicht werden kann, um damit Schadstoffe und umweltbedenkliche Substanzen zu eliminieren.

Vor diesem Hintergrund ist es Aufgabe der vorliegenden Erfindung, eine verbesserte Vorrichtung bzw. ein Verfahren anzugeben, die/das eine Steigerung der Filterleistung ermöglicht, um eine Umsetzung von Schadstoffen zu umweltverträglichen Stoffen zu bewirken. Gelöst wird diese Aufgabe durch eine Vorrichtung mit den Merkmalen des Anspruchs 1 bzw. einem Verfahren mit den Merkmalen des Anspruchs 12.

Der Kern der Erfindung besteht darein, dass die obere und untere Filterzone aus Kies, Sand und dergleichen homogen aufgebaut sind. Bei den bisher bekannten Anlagen, bestehen die Schichten der einzelnen Filterzonen aus unterschiedlichen Materialien. Durch den erfindungsgemäßen Aufbau wird eine Vereinfachung der Fllteranordnung und letztendlich eine ökonomisch und ökologisch hervorragende Filterleistung erzielt.

Um die Denitrifikationsleistung in der unteren Filterzone der erfindungsgemäßen Filteranlage zu erhöhen, werden über eine Vorrichtung, wie z. B. einen externen Behälter, Kohlenstoffsubstrate zugeführt. Dabei kann es sich um ein Medium handeln, das Kohlenstoffquellen in beliebiger Form enthält. Am einfachsten besteht das Medium aus nicht biologisch behandelten Abwasser, das die obere Filterzone nicht durchlaufen hat.

Zur Steigerung der Filterleistung werden der unteren Filterzone Mikroorganismen, wie Bakterien oder Hefen, zugeführt. Diese Mikroorganismen sind vorzugsweise fakultativ anaerob und genetisch so modifiziert, dass sie, gegebenenfalls unter Zusatz weiterer Substanzen, eine Umsetzung der Schadstoffe zu umweltverträglichen Stoffen bewirken.

Das in der oberen Filterzone biologisch gereinigte Abwasser gelangt in einer ersten Ausführungsform durch eine oder mehrere Unterbrechungen der Sperrschicht, die vorzugsweise an den Rändern der Anlage angeordnet sind, in die untere Filterzone. Durch Rohrleitungen oder ähnliche Einrichtungen wird ein kohlenstoffhaltiges Medium, wie z. B. nicht biologisch behandeltes Abwasser, beispielsweise aus der Zulaufeinrichtung der oberen Filterzone, direkt in die untere Filterzone befördert. Die Fördermenge kann z. B. mit einem Schieber reguliert werden.

In der unteren Filterzone kommt es nun zu einer Vermischung des in der oberen Zone biologisch behandelten, nitrifizierten Abwassers mit dem nicht biologisch behandelten Abwasser, wodurch den denitrifizierenden Mikroorganismen organischer Kohlenstoff zur Verfügung steht und gleichfalls eine Denitrifikation ermöglicht wird.

Sofern die Sperrschicht zwischen den Zonen keine Durchbrechungen aufweist, kann das in der oberen Zone biologisch behandelte Abwasser über Entnahmevorrichtungen in ein separat angeordnetes Behältnis (Behälter, Schacht, Becken o.ä.) geleitet werden. An dieser Stelle kann nun biologisch unbehandeltes Abwasser bzw. Abwasser, welches noch über eine für die Denitrifikation ausreichende Menge an organischen Kohllenstoffverbindungen verfügt, zudosiert werden. Es wird das auf diese Weise vermischte Abwasser In die untere Filterzone eingebracht, wo selbst die Denitrifikation unter anaeroben Bedingungen abläuft.

Eine weitere Variante ist dadurch charakterisiert, dass anstelle von biologisch unbehandeltem Abwasser, bzw. Abwasser, welches noch über eine für die Denitrifikation ausreichende Menge an organischen Kohlenstoffverbindungen verfügt, eine andere Kohlenstoffquelle zudosiert wird, wie beispielsweise Methanolsäure, Essigsäure o.ä. Auch können weitere organische Substanzen zudosiert werden, die bei Verarbeitungsprozessen o.ä. entstehen, wie beispielsweise Schmutzwasser aus der Kompostherstellung, Presswasser aus der Biovergärung, Gärrückstände, Schmutzwässer aus der Wein- und Obstaufbereitung, Brennereien, Tierhaltung usw. Die Zuführung organischer Kohlenstoffverbindung erfolgt vorzugsweise über eine Vorrichtung, beispielsweise einen Behälter, Indem das Abwasser der unteren Filterzone zugeführt werden kann oder indem organische Kohlenstoffverbindungen von außen zugeführt werden können. Ferner ist eine Zuführung von Mikroorganismen und anderen Substanzen in die untere Filterzone über eine solche Vorrichtung möglich. Durch die Zuführung von Mikroorganismen kann eine Animpfung der unteren Filterzone vorgenommen werden, so dass die Kultivierung bestimmter schadstoffabbauender Bakterienstämme oder hietestämmen möglich ist. Auch ist es möglich, genetisch modifizierte Mikroorganismen die auf den Abbau bestimmter (Schad-) Stoffe spezialisiert sind zuzuführen, Ein Vorteil liegt darin, dass diese Impfung der unteren Filterzone in einem abgeschlossenen Bereich stattfindet und nicht direkt in das gereinigte Wasser und/oder in die Umgebung gelangen kann, Die darüber liegende obere Filterzone schützt die untere Filterzone bei starken Regenfällen oder anderen Hochwassersituationen vor Ausschwemmung der eingebrachten Wirkstoffe.

Durch diese spezifische Impfung der unteren Filterzone kann eine Anreicherung von Schadstoffen in der Nahrungskette gezielt vermindert und gegebenenfalls völlig verhindert werden, Dadurch ist es möglich, die Schadstoffe von stark belasteten Abwässern und/oder Böden wlrkungsvoll zu beseitigen.

Ferner ist auch eine nachträgliche Impfung möglich, wenn beispielsweise eine Wasseranalyse ergeben hat, dass eine Verunreinigung vorliegt. Je nach Verunreinigung kann eine spezifische Impfung mit Mikroorganismen, die gegebenenfalls genetisch modifiziert sind, erfolgen.

Eine Ausführungsform sieht eine Vorrichtung im Ablauf des Verfahrens vor, die für abwechselnde und unterschiedliche Milieubedingungen in beiden Filterzone sorgt. Bei der Vorrichtung kann es sich um ein mechanisches Ventil, eine Pumpe o.ä. handeln, welche den Ablauf aus der Anlage zunächst geschlossen hält, bis ein gewünschtes Einstauziel von unten nach oben erreicht ist. Dabei kann die untere Filterzone vollständig oder auch nur teilweise oder auch überhaupt nicht eingestaut werden. Wenn das gewünschte Einstauziel erreicht ist, öffnet sich die Vorrichtung im Ablauf der Anlage bzw. die Pumpe fördert das aufgestaute Abwasser aus der Anlage. Nach der Entleerung einer gewünschten Menge Abwasser schließt die Vorrichtung im Ablauf bzw. schaltet die Pumpe ab. Nun beginnt der Einstauprozess wieder von vorne.

Durch diesen wechselnden Einstaubetrieb werden in den verschiedenen Zonen abwechselnde und unterschiedliche Milieubedingungen erreicht, die insgesamt dazu führen, dass alle erwünschten biologischen Abbauprozesse in der Anlage erreicht werden. Der Prozess des biologischen Abbaus der organischen Frachten sowie eine Nitrifikationsleistung werden vorwiegend in der uneingestauten, aeroben Phase erzielt, weil Luftsauerstoff in die Filterporen gelangen kann. Eine Denitrifikation wird vorwiegend in der aufgestauten Phase erreicht, weil hier vorwiegend anaerobe Bedingungen herrschen und dadurch einerseits das zulaufend ungereinigte Abwasser nicht mehr ausreichend aerob abgebaut wird und andererseits gute Bedingungen für die Denitrifikation vorherrschen. Ein ständiger, automatischer Wechsel der Milieubedingungen innerhalb der Filterzonen, welche durch die Einstellung der Ablaufvorrichtung erreicht wird, ist notwendig, um insgesamt für gute Abbauleistungen für die organischen Schmutzfrachten sowie die Stickstofffrachten zu erzielen.

Bei der optionalen Anwendung dieser Ausführungsform kann auf eine Sperrschicht zwischen den Filterzonen verzichtet werden, was aber nicht zwingend ist.

Eine weitere Ausführungsform ist für die gezielt Rückhaltung von Phosphatyerbindungen vorgesehen. Sie kann dort eingesetzt werden, wo Anforderungen an die Äblaufqualität des gereinigten Abwassers auch den Parameter Phosphat einbeziehen.

Phosphor ist ein werlvoller Pflanzennährstoff, der in der Natur nur in begrenzten Mengen vorkommt und somit für die Versorgung der Pflanzen auf der Erde eine durchaus limitierte natürlich Ressource darsteilt. Vor diesem Hintergrund ist es als fragwürdig bzw. nicht nachhaltig einzustufen, dass in den meisten bekannten Abwasserbehandlungsverfahren, welche Anforderungen an Phosphatablaufwerte zu erfüllen haben, dieser wertvolle und in seinem Vorkommen äußerst begrenzte Pflanzennährstoff durch zugabe von Chemikalien o,ä. Verfahren für immer kontaminiert bzw. unbrauchbar gemacht wird.

Phosphatrückhalt in bewachsenen bodenfiltern ist je nach physikalischer und chemischer Zusammensetzung des eingesetzten Filtermaterials sehr unterschiedlich. Wird beispielsweise ein eisen- und/oder kalkhaltiges Filtersubstrat eingesetzt, so ist die Aufnahme- und Anlagerungskapazität von Phosphorverbindungen höher anzusetzen, als das bei Substraten mit geringen Eisen- oder Kalkgehalten der Fall ist.

Aber auch eisen- und kalkhaltige Substrate können nach einigen Jahren ihre Aufnahme- und Anlagerungskapazität von Phosphorverbindungen verringern bzw. sogar gänzlich verlieren.

Um diesem Effekt vorzubeugen, sieht diese Ausführungsform folgende zwei Varianten vor.

Wenn die Phosphorbindekapazität im Bodenfilter nachlässt, können bei der ersten Variante beispielsweise Eisenspane, eisenhaltige Stoffe, Gesteine o.ä. oder kalkhaltige Stoffe, Gesteine oder Flüssigkeiten In die Filterzonen eingebracht werden. Diese sorgen für einen bestimmten Zeitraum für eine Verbesserung der Phosphatanlagerungskapazität. Wenn diese wiederum nachlässt, kann die Einbringung der o.g. Stoffe wiederholt werden.

Bei der zweiten Variante handelt es sich um eine Vorrichtung für Phosphatrückhalteng, welche in der Regel nach einem bewachsenen Bodenfilter eingesetzt werden kann. Dabei wird das biologisch behandelte Abwasser über einen Filterkörper geleitet, der Elemente mit einer hohen Phosphorbindekapazitäl enthält. Dieser Filterkörper kann aus eisenhaltigen, kalkhaltigen oder vergleichbaren mineralischen Bestandteilen bestehen. Der Filterkörper befindet sich in einem abgedichteten Behälter, Schacht, Becken oder ähnlichem, welcher an der Sohle eine Entnahme bzw. Auslaufvorrichtung aufweist.

Wenn die Phosphatbindekapazität aufgrund der bereits erfolgten Phosphatanlagerung nach einem Zeitraum nachlässt, kann das Material als Phosphatdünger unter Einhaltung der gesetzlichen Anforderungen in Gärten, Gartenbau und Landwirtschaft eingesetzt werden.

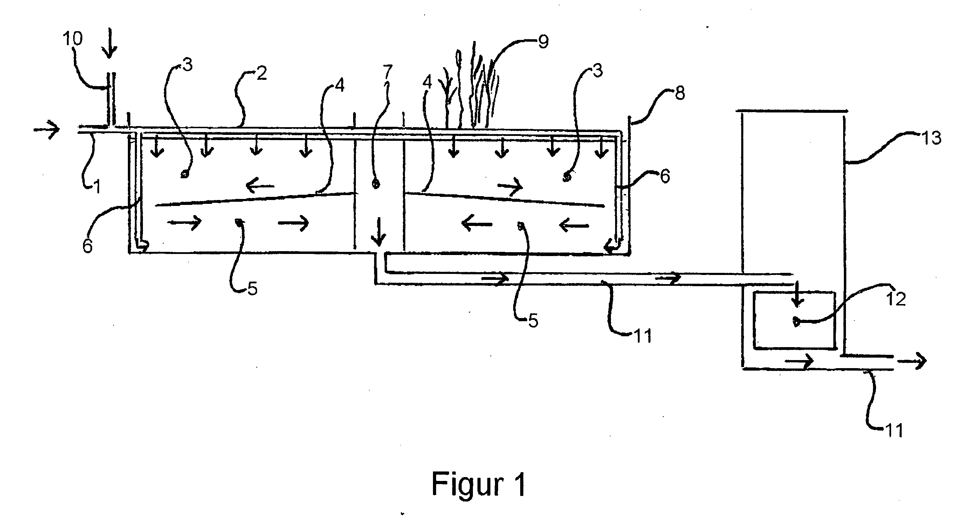

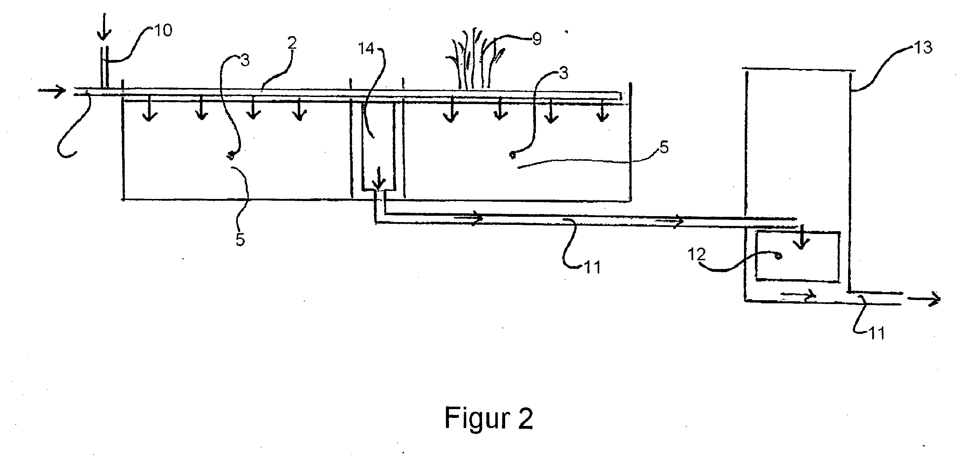

Der Gegenstand vorliegender Erfindung wird in den beiliegenden Figuren 1 und 2, die bevorzugte Ausführungsformen darstellen, genauer erläutert.

In Fig. 1 ist eine erfindungsgemäße Horizontal-Vertikal-Filteranlage gezeigt, wie sie in der ersten Kammer, zweiten und dritten Ausführungsform aufgebaut ist. Über einen Zulauf 1 gelangt Schmutzwasser (Abwasser) über ein Verteilersystem 2 in die obere Filterzone 3. Die besten Ergebnisse werden erzielt, wenn das Schmutzwasser gleichmäßig auf die obere Filterzone 3 aufgetragen wird. Das Wasser tritt vertikal durch die obere Filterzone 3 hindurch. Erreicht es die Sperrschicht 4 mit Unterbrechungen, erfolgt eine Horizontalströmung in der oberen Filterzone 3 zu den Rändern hin. Die Sperrschicht 4 mit Unterschicht ist vorzugsweise geneigt, so dass die Flussrichtung vorgegeben wird. Durch die von oben drückende Wasserlast wird das Schmutzwasser von der oberen Filterzone 3 in die untere Filterzone 5 geleitet. Durch die erfindungsgemäße Anordnung wird eine ausreichende Verweildauer und Filterzeit in den einzelnen Bereichen erreicht. Ein unkontrolliertes vertikales Durchströmen des Wassers wird durch die Sperrschicht 4 mit Unterbrechungen verhindert. Das so gereinigte Abwasser gelangt über eine zentrale Vorrichtung 7 in den Ablauf 11.

In die untere Filterzone 5 können weitere Kohlenstoffverbindungen, Mikroorganismen oder andere Substanzen zugeführt werden. Die Vorrichtung 6 wird durch eine Abdichtung 8 von dem Erdreich getrennt. Auf der oberen Filterzone 3 kann eine Bepflanzung mit Pflanzen 9 erfolgten.

Das über den Ablauf 11 gereinigte Abwasser kann in einer weiteren Ausführungsform in eine Phosphatrückhaltevorrichtung 12 behandelt werden. Das so gewonnene Phosphat kann in einem Behälter 13 aufgefangen werden. Das Phosphat befreite Abwasser gelangt über den Ablauf 11 schließlich in die vargesehenen Bedarfssysteme.

In Fig. 2 ist als Vergleichsbeispiel eine Ausführungsform gezeigt, die keine Sperrschicht 4 aufweist. Die obere Filterzone 3 und die untere Filterzone 5 grenzen ohne Sperrschicht 4 aneinander. Bei dieser Anlage sind Einstauregulatoren, insbesondere Ventile und/oder Pumpen vorhanden, welche für abwechselnde und unterschiedliche Milieubedingungen in den beiden Filterzonen 3, 5 sorgen. Zunächst wird in der unteren Filterzone 5 ein Einstau bewirkt, wodurch diese Filterzone anaeroben Milieubedingungen ausgesetzt wird. Die obere Filterzone wird durch einen aeroben Bereich definiert, der von der Einstaugrenze abhängt. Dadurch laufen die schon zuvor erläuterten Prozesse in den einzelnen Filterzonen 3, 5 ab. Zusätlich ist bei dieser Ausführungsform eine Vorrichtung 7 zur Zudoslerung von Stoffen für die Verbesserung der Phosphat-Kapazität enthalten.

### Bezugszeichenliste

- Zulauf 1
- Verteilersystem 2
- Obere Filterzone 3
- Sperrschicht mit Unterrechungen an den Rändern 4
- Untere Filterzone 5
- Vorrichtung zur Einleitung von nicht biologisch behandeltem Schmutzwasser in die untere Filterzone 6
- Vorrichtung zur Sammlung und Abführung von gereinigtem Schmutzwasser 7
- Abdichtung 8
- Pflanzen 9
- Vorrichtung zur Zudosierung von Stoffen zur Verbesserung der Phosphatbindekapazität 10 (1. Variante)
- Ablauf 11
- Vorrichtung zur Phosphatrückhaltung 12 (2. Variante)
- Behälter, Schacht, Becken o. ä. 13
- Vorrichtung 14 für abwechselnde und unterschiedliche Milieubedingungen in den Filterzonen 3, 5.

Mit vorliegender Erfindung wird eine Reihe von Vorteilen erreicht, insbesondere eine sprunghafte Verbesserung der Denitrifikationsleistung und/oder der Phosphatrückhaltung und/oder der Phosphateliminierung.

## Patentansprüche

1. Vertikal-Horizontal-Filteranlage zur biologischen Reinigung von Schmutzwässern, bestehend aus
- einer oberen Filterzone (3), bestehend aus Kies, Sand oder dergleichen, mit Zuführungen (1) für das Schmutzwasser,
- einer darunter angeordneten unteren Filterzone (5), bestehend aus Kies, Stand oder dergleichen,
- und mindestens einer Entnahmestelle (7), wobei das Schmutzwasser nach Durchströmen der oberen Filterzone (3) die untere Filterzone (5) durchströmt und die Filteranlage an ihren Seiten und/oder ihrem Boden eine Abdichtung (8) gegen das Erdreich aufweist, wobei
- über eine Vorrichtung (6) ein Medium, das organischen Kohlenstoff enthält, in die untere Filterzone (5) einleitbar ist,
- die obere Filterzone (3) eine aerobe Filterzone ist, in der eine Nitrifikation des Schmutzwassers stattfindet,
- die untere Filterzone (5) eine anaerobe Filterzone mit denitrifizierenden Mikroorganismen ist, in der eine Vermischung und Denitrifikation des in der oberen Filterzone (3) behandelten, nitrifizierten Schmutzwassers mit dem Medium, das organischen Kohlenstoff enthält, stattfindet,
- die untere Fliterzone (5) und die obere Filterzone (3) homogen aufgebaut sind, **gekenntzeichnet durch die Merkmal:**
zwischen der unteren Filterzone (5) und der oberen Filterzone (3) ist eine Sperrschicht angeordnet, die keine Durchbrechungen aufweist,
In der oberen Filterzone (3) und/oder der unteren Filterzone (5) sind Einstauregulatoren, insbesondere Ventile und/oder Pumpen, angeordnet,
in der oberen Filterzone (3) und/oder der unteren Filterzone (5) sind filterkörper mit hoher Phosphorbindekapazität angeordnet.

2. Filteranlage nach Anspruch 1, **gekennzeichnet durch** das Merkmal:
- über die Vorrichtung (6) ist biologisch unbehandeltes Schmutzwasser einleitbar.

3. Filteranlage nach einem der Ansprüche 1 bis 2, **gekennzeichnet durch** das Merkmal. über die Vorrichtung (6) sind zur Steigerung der Filterleistung Mikroorganismen und/oder Substanzen in die untere Filterzone (5) zuführbar, die eine Verstoffwechselung der im Schmutzwasser enthaltenen Stoffe bewirken der unterstützten.

4. Filteranlage nach Anspruch 3, **gekennzeichnet durch** das Merkmal;
- bei den Mikroorganismen handelt es sich um genetisch modifizierte Pakterienstämme oder Hefestämme.

5. Filteranlage nach einem der Ansprüche 1 bis 4, **gekennzeichnet durch** das Merkmal:
- über die Vorrichtung (6) ist Methanolsäure oder Essigsäure einleitbar.

6. Filteranlage nach einem der Ansprüche 1 bis 5, **gekennzeichnet durch** das Merkmal:
- über die Vorrichtung (6) sind/ist Schmutzwasser aus der Komposthersteilung, der Wein- und Obstverarbeitung oder der Tierhaltung und/oder Presswasser aus der Biovergärung einleitbar.

7. Filteranlage nach einem der Ansprüche 1 bis 6, **gekennzeichnet durch** das Merkmal:
- über die Vorrichtung (6) sind organische Substanzen, insbesondere Gärrückstände oder Rückstände aus der Tierhaltung, einleitbar.

8. Filteranlage nach einem der Ansprüche 1 bis 7, **gekennzeichnet durch** das Merkmal:
- die Sperrschicht (4) verläuft schräg nach unten.

9. Filteranlage nach einem der Ansprüche 1 bis 8, **gekennzeichnet durch** die Merkmale:
- die obere Filterzone (3) besitzt wenigstens eine Entnahmevorrichtung für das biologisch gereinigte Abwasser,
ein separat angeordnetes Behältnis nimmt dieses Abwasser auf und gibt es in die untere Filterzone (5) ab.

10. Filteranlage nach Anspruch 9, **gekennzeichnet durch** das Merkmal:
das Behältnis besitzt eine Einrichtung zum Zudosieren des kohlenstoffhaltigen Mediums und/oder der organischen Substanzen.

11. Verfahren zur Schrnutzwasserreinigung durch Horizontal-Vertikal-Filterung, bei dem eine obere Filterzone, bestehend aus Kies, Sand oder dergleichen, mit Schmutzwasser in einer darunter angeordneten unteren Filterzone, bestehend aus Kies, Sand oder dergleichen, durchströmt wird, wobei an den Seiten und/oder den Boden eine Abdichtung gegen das Erdreich erfolgt, wobei ein Medium, das organischen Kohlenstoff enthält, in die untere Filterzone eingefeitet wird und die obere Filterzone eine aerobe Zone ist, in der eine Nitrifikation des Schmutzwassers stattfindet, und die untere Filterzone eine anaerobe Zone mit denitrifiziarenden Mikroorganismen ist, in der eine Vermischung und Denitrifikation des in der oberen Filterzone behandelten, nitrifizierten Schmutzwassers mit dem Medium, das organischen Kohlenstoff enthält, stattfindet, wobei die untere Filterzone und die obere Filterzone homogen aufgebaut sind, **gekennzeichnet durch die Merkmale, dass** zwischen der unteren Filterzone und der oberen Filterzone eine Sperrschicht angeordnet wird, die keine Durchbrechungen enthält, dass die untere Filterzone voliständig oder teilweise über Einstauregulatoren in der oberen Filter und/oder unteren Filterzone eingestaut wird, und dass Ferner eine gezielt Rückhaltung vorn Phosphatverbindungen über Filterkörper, die in der oberen und/oder unteren Filterzone angeordnet sind, erfolgt.

12. Verfahren nach Anspruch 11, **gekennzeichnet durch** das Merkmal:
- in dem Verfahren wird eine Filteranlage gemäß einem der Ansprüche 1 bis 10 eingesetzt.

## Claims

1. Vertical-horizontal filtering unit for the biological purification of wastewater, comprising:
- an upper filter zone (3), comprising gravel, sand or the like, having supply lines (1) for the wastewater,
- a lower filter zone (5) arranged thereunder, comprising gravel, sand, or the like,
- and at least one extraction point (7), the wastewater flowing through the lower filter zone (5) after flowing through the upper filter zone (3), and the filtering unit having a seal (8) against the soil on the sides and/or the base thereof,
- a medium, which contains organic carbon, being able to be introduced into the lower filter zone (5) by means of a device (6),
- the upper filter zone (3) being an aerobic filter zone, in which nitrification of the wastewater occurs,
- the lower filter zone (5) being an anaerobic filter zone which comprises denitrifying microorganisms and in which the nitrified wastewater which has been treated in the upper filter zone (3) is mixed with the medium which contains organic carbon and denitrified,
- the lower filter zone (5) and the upper filter zone (3) being constructed homogeneously,
**characterised by** the following features:
- a barrier layer having no perforations is arranged between the lower filter zone (5) and the upper filter zone (3)
- fill level regulators, in particular valves and/or pumps, are arranged in the upper filter zone (3) and/or the lower filter zone (5)
- filter bodies having a relatively high phosphorous binding capacity are arranged in the upper filter zone (3) and/or the lower filter zone (5).

2. Filtering unit according to claim 1, **characterised by** the following feature:
- wastewater which has not been biologically treated can be introduced by means of the device (6).

3. Filtering unit according to either claim 1 or claim 2, **characterised by** the following feature:
- microorganisms and/or substances which cause or support a metabolisation of the materials present in the wastewater can be supplied into the lower filter zone (5) by means of the device (6) in order to improve the filter performance.

4. Filtering unit according to claim 3, **characterised by** the following feature:
- the microorganisms are genetically modified bacteria strains or yeast strains.

5. Filtering unit according to any of claims 1 to 4, **characterised by** the following feature:
- methanoic acid or acetic acid can be introduced by means of the device (6).

6. Filtering unit according to any of claims 1 to 5, **characterised by** the following feature:
- wastewater from compost production, winemaking and fruit processing or animal husbandry, and/or press water from biofermentation can be introduced by means of the device (6).

7. Filtering unit according to any of claims 1 to 6, **characterised by** the following feature:
- organic substances, in particular fermentation residues or residues from animal husbandry, can be introduced by means of the device (6).

8. Filtering unit according to any of claims 1 to 7, **characterised by** the following feature:
- the barrier layer (4) extends obliquely downwards.

9. Filtering unit according to any of claims 1 to 8, **characterised by** the following feature:
- the upper filter zone (3) has a least one extraction device for the biologically purified sewage,
- a separately arranged receptacle receives this sewage and discharges it into the lower filter zone (5).

10. Filtering unit according to claim 9, **characterised by** the following feature:
- the receptacle has a means for the metered addition of the carbonaceous medium and/or the organic substances.

11. Method for wastewater purification by horizontal-vertical filtering, in which wastewater flows through an upper filter zone, comprising gravel, sand, or the like, into a lower filter zone arranged thereunder, comprising gravel, sand, or the like, a seal against the soil being produced on the sides and/or the base, a medium which contains organic carbon being introduced into the lower filter zone, and the upper filter zone being an aerobic zone in which nitrification of the wastewater occurs, and the lower filter zone being an anaerobic zone which comprises denitrifying microorganisms and in which the nitrified wastewater which has been treated in the upper filter zone is mixed with the medium which contains organic carbon and denitrified, the lower filter zone and the upper filter zone being constructed homogeneously, **characterised in that** a barrier layer having no perforations is arranged between the lower filter zone and the upper filter zone, **in that** the lower filter zone is filled in full or in part by means of fill level regulators in the upper filter and/or lower filter zone, and **in that** in addition, selective retention of phosphate compounds takes place by means of filter bodies which are arranged in the upper and/or lower filter zone.

12. Method according to claim 11, **characterised by** the following feature:
- a filtering unit according to any of claims 1 to 10 is used in the method.

## Revendications

1. Installation de filtration verticale-horizontale pour l'épuration biologique d'eaux sales, composée
- d'une zone de filtration supérieure (3) constituée de gravier, sable ou analogue avec des amenées (1) pour les eaux sales,
- d'une zone de filtration inférieure (5) disposée au-dessous, constituée de gravier, sable ou analogue,
- et d'au moins un point de prélèvement (7), les eaux sales traversant la zone de filtration inférieure (5) après avoir traversé la zone de filtration supérieure (3) et l'installation de filtration présentant sur ses côtés et/ou son fond une étanchéité (8) par rapport à la terre, dans laquelle installation de filtration
- un milieu qui contient du carbone organique peut être introduit dans la zone de filtration inférieure (5) via un dispositif (6),
- la zone de filtration supérieure (3) est une zone de filtration aérobie dans laquelle a lieu une nitrification des eaux sales,
- la zone de filtration inférieure (5) est une zone de filtration anaérobie avec des microorganismes dénitrifiants dans laquelle ont lieu un mélange et une dénitrification des eaux sales nitrifiés, traitées dans la zone de filtration supérieure (3), avec le milieu qui contient du carbone organique,
- la zone de filtration inférieure (3) et la zone de filtration supérieure (5) sont réalisées de manière homogène,
**caractérisée en ce que**
- une couche de barrage qui ne présente aucune brèche est disposée entre la zone de filtration inférieure (5) et la zone de filtration supérieure (3),
- des régulateurs de mise en eau, en particulier des vannes et/ou des pompes, sont disposés dans la zone de filtration supérieure (3) et/ou la zone de filtration inférieure (5),
- des corps filtrants à haute capacité de rétention du phosphore sont disposés dans la zone de filtration supérieure (3) et/ou la zone de filtration inférieure (5).

2. Installation de filtration selon la revendication 1, **caractérisée en ce que** :
- des eaux sales non traitées biologiquement peuvent être introduites via le dispositif (6).

3. Installation de filtration selon l'une des revendications 1 à 2, **caractérisée en ce que** :
- des microorganismes et/ou des substances qui provoquent ou renforcent la métabolisation des substances contenues dans les eaux sales peuvent être amenés dans la zone de filtration inférieure (5) via le dispositif (6) pour augmenter le rendement de filtration.

4. Installation de filtration selon la revendication 3, **caractérisée en ce que** :
- les microorganismes sont des souches de bactéries ou des souches de levures génétiquement modifiées.

5. Installation de filtration selon l'une des revendications 1 à 4, **caractérisée en ce que** :
- de l'acide méthanoïque ou de l'acide acétique peut être introduit via le dispositif (6).

6. Installation de filtration selon l'une des revendications 1 à 5, **caractérisée en ce que** :
- des eaux sales provenant de la production de compost, du traitement du vin et des fruits ou de l'élevage des animaux et/ou du jus de pressage provenant de la biofermentation peuvent/peut être introduit(es) via le dispositif (6).

7. Installation de filtration selon l'une des revendications 1 à 6, **caractérisée en ce que** :
- des substances organiques, en particulier des résidus de fermentation ou des résidus provenant de l'élevage des animaux, peuvent être introduites via le dispositif (6).

8. Installation de filtration selon l'une des revendications 1 à 7, **caractérisée en ce que** :
- la couche de barrage (4) s'étend en biais vers le bas.

9. Installation de filtration selon l'une des revendications 1 à 8, **caractérisée en ce que** :
- la zone de filtration supérieure (3) possède au moins un dispositif de prélèvement pour les eaux usées biologiquement épurées,
- un récipient disposé séparément reçoit ces eaux usées et les délivre dans la zone de filtration inférieure (5).

10. Installation de filtration selon la revendication 9, **caractérisée en ce que** :
- le récipient possède un moyen pour doser le milieu contenant du carbone et/ou les substances organiques.

11. Procédé d'épuration d'eaux sales par filtration verticale-horizontale, dans lequel une zone de filtration supérieure, composée de gravier, sable ou analogue, est traversée par des eaux sales dans une zone de filtration inférieure disposée au-dessous, composée de gravier, sable ou analogue, une étanchéité par rapport à la terre étant réalisée sur les côtés et/ou le fond, un milieu qui contient du carbone organique étant introduit dans la zone de filtration inférieure et la zone de filtration supérieure étant une zone aérobie dans laquelle a lieu une nitrification des eaux sales, et la zone de filtration inférieure étant une zone anaérobie avec des microorganismes dénitrifiants dans laquelle ont lieu un mélange et une dénitrification des eaux sales nitrifiées, traitées dans la zone de filtration supérieure, avec le milieu qui contient du carbone organique, **caractérisé en ce qu'**une couche de barrage qui ne présente aucune brèche est disposée entre la zone de filtration inférieure et la zone de filtration supérieure, que la zone de filtration inférieure est entièrement ou partiellement mise en eau au moyen de régulateurs de mise en eau dans la zone de filtration supérieure et/ou la zone de filtration inférieure, et qu'une rétention ciblée de composés phosphatés est réalisée au moyen de corps filtrants qui sont disposés dans la zone de filtration supérieure et/ou inférieure.

12. Procédé selon la revendication 11, **caractérisée en ce que** :
- une installation de filtration selon l'une des revendications 1 à 10 est utilisée dans le procédé.
